# EUROPÄISCHE PATENTSCHRIFT

(11) **EP 0 558 973 B1**
(45) Veröffentlichungstag und Bekanntmachung des Hinweises auf die Patenterteilung: **07.08.1996**
(21) Anmeldenummer: 93102173.7
(22) Anmeldetag: 11.02.1993
(51) Int. Cl.: E05F 15/14, E06B 11/04

(54) **Schiebetor**
Sliding gate
Portail coulissant

(30) Priorität: 02.03.1992 DE 4206565
(43) Veröffentlichungstag der Anmeldung: 08.09.1993
(73) Patentinhaber: MARANTEC ANTRIEBS- UND STEUERUNGSTECHNIK GMBH & CO. PRODUKTIONS KG, D-33428 Marienfeld (DE)
(72) Erfinder: Hörmann, Michael, D-33428 Marienfeld (DE)
(74) Vertreter: Flügel, Otto, Dipl.-Ing.

(56) Entgegenhaltungen:
- EP-A- 0 043 592
- DE-A- 1 559 961
- DE-U- 8 911 718
- NL-C- 43 601

## Beschreibung

Die Erfindung betrifft ein Schiebetor, insbesondere Schiebetor-Sockelbalken mit den Merkmalen des Oberbegriffs des Anspruchs 1.

Schiebetore der hier in Rede stehenden Art können über bodenseitige Schienen abrollend geführt und abgestützt sein, sie können aber auch über Führungsrollenböcke die sich nur über einen Bruchteil der Torblattlänge erstrecken, insoweit nach Art einer Schiebeschranke frei von Bodenberührung in die Schließstellung und zurück bewegt werden. In jedem Falle sind bei den Toren der hier in Rede stehenden Art die jeweiligen Antriebe ortsfest angeordnet und mit einem Abtriebsritzel versehen, das in eine sich über die Länge des Torblattes in Verschieberichtung (gut die Breite der zu verschließenden Toröffnung) bzw. zumindest den jeweils ausgenutzten Verschiebeweg erstreckende Verzahnungsausbildung kämmend eingreift. Es sind auch vergleichbar aufgebaute Reibantriebe bekannt, bei denen jedoch das Abtriebsreibrad des Antriebsmotoraggregates gegen eine entsprechende, schienenförmige Reibschiene druckbelastet anliegen muß und aufgrund möglichen Schlupfes eine Simulierung der Verschiebestrecke im Rahmen des Antriebsaggregates Probleme bereitet.

Es ist bekannt - DE-AS 15 59 961 - das Abtriebsritzel in eine metallene, sich über die Verschiebestrecke hinweg erstreckende Zahnstange eingreifen zu lassen, deren Verzahnung durch Fräsen hergestellt wird und je nach verlangter Lebensdauer und Laufruhe einer zusätzlichen noch aufwendigeren Bearbeitung bedarf. Dabei machen sich Temperaturschwankungen über die Länge der Zahnstange hinweg für den Getriebeeingriff störend bemerkbar, unter den Witterungseinflüssen treten Rosterscheinungen und damit Verschleiß auf, so daß auch ein entsprechend erheblicher Wartungsaufwand erforderlich wird. Bei Verwendung eines Kettenstocktriebes treten ähnliche Nachteile auf, weil der dort vorgesehene Eingriff zwischen treibendem und getriebenem Teil von vorne herein wenig genau und abrollfreundlich arbeitet, weshalb Geräuschentwicklung, Verschleiß und Rostgefahr bzw. Wartungsaufwand ähnlich zu beurteilen sind wie bei der vorstehend angesprochenen Zahnstange.

Es ist weiterhin bekannt - DE-GM 84 00 934.9 -, anstelle einer gefrästen Zahnstange einen sich in Verschieberichtung des Torblattes unter Vorspannung erstreckenden Zahnriemen vorzusehen, dessen Verformbarkeit es erlaubt, in einem großen Umschlingungswinkelbereich um das in dessen Verzahnung eingreifende Abtriebsritzel des Antriebsmotoraggregates herumgeführt zu werden. Ein solcher insoweit freigespannter Zahnriemen muß in sich selbst erhebliche Zugspannungen aufnehmen können und bereitet hinsichtlich seiner Führung gewisse Probleme. Darüber hinaus ist aufgrund des angestrebten hohen Umschlingungswinkel eine fortlaufende Verformungsarbeit an dem Zahnriemen zu leisten. Diese könnte man durch eine aus Kunststoff gefertigte Zahnstange umgehen, die dann allerdings als fester Gegenstand in Anlehnung an die bekannten Vorstellungen wiederum als bearbeitungsintensives Bauteil herzustellen wäre.

Weiterhin ist aus der EP-B 0 128 248 ein Tor zum Sperren eines Durchgangs bekannt, das im wesentlichen aus mindestens einer Abstützung und einem bezüglich dieser Abstützung bewegbaren Teil besteht, der durch ein Gebilde von aufrecht stehenden, durch einen Träger miteinander verbundenen Stäben gebildet wird, wobei der Träger eine Reihe durchgehender Öffnungen aufweist, in denen je ein Stab aufnehmbar ist und jeder Stab mit Verbindungsmitteln zur Befestigung am Träger versehen ist. Es handelt sich somit um ein Schiebetor, dessen Antrieb über eine aus Segmenten zusammengesetzte Zahnstange erfolgt. Die Zahnübersetzung ist durch eine Vielzahl von Elementen unveränderlicher Länge gebildet, welche in ein Profil eingeschoben sind.

Aus der NL-C-43 601 ist ferner eine Zahnstange bekannt, die aus mehreren Elementen besteht, die miteinander verbunden sind.

Schließlich offenbart die DE-U 88 16 058.0 eine Einrichtung zum motorischen Verstellen von insbesondere Klappen, Fenstern, Türen, Toren oder dergleichen, im wesentlichen umfassend eine Antriebseinheit mit Getriebemotor, der die Verstellbewegung über ein mit einer Zahnstange in Eingriff stehendes Zahnritzel überträgt, wobei die Antriebseinheit an ihrem Gehäuse mit einem quer zu der Abtriebswelle ausgerichteten Führungsteil versehen ist, in welchem ein vorzugsweise aus Leichtmetall gezogenes Hohlprofil geführt ist, innerhalb dessen die Zahnstange in Längsrichtung gleitfähig angeordnet ist. Aus dieser Druckschrift ist bekannt, daß die Zahnstange aus mehreren Teilstücken besteht, die miteinander verbunden in einer Halteschiene angeordnet sind.

Der Erfindung liegt die Aufgabe zugrunde, ein Schiebetor der eingangs genannten Art DE-U 88 16 058.0 zur Verfügung zu stellen, dessen torblattseitige Zahnstangen- Antriebsausbildung an annähernd beliebige Torblattlängserstreckungen anpaßbar und - insbesondere in großen Stückzahlen gefertigt - billiger herstellbar und hinsichtlich besonders verschleißgefährdeter Partien einfach auszuwechseln ist, wobei die Zahnstangenausbildung eine sichere, einfach handhabbare und auf alle Belastung ausgelegte Verbindung der Zahnstangensegmente aufweist.

Ausgehend von einem Schiebetor mit den eingangs genannten Merkmalen wird diese Aufgabe erfindungsgemäß durch die Merkmale des Kennzeichens des Anspruchs 1 gelöst.

Durch die Maßnahmen, die Zahnstangenausbildung aus einer Reihe von aufeinanderfolgend in eine Schiene einzusetzenden Zahnstangensegmenten zusammenzusetzen, also aus verhältnismäßig geringen Längenabschnitten der gewünschten Zahnstange, so daß sich bereits aufgrund der Unterteilung eine Anpassungsmöglichkeit an unterschiedliche Torlängen ergibt, und weiterhin dadurch, daß die einzelnen Segmente dieser Zahnstangenausbildung jeweils als Gußteil, insbesondere Kunststoff-Spritzgußteil, hergestellt sind, ergibt sich insgesamt der Vorteil, eine Zahnstange praktisch beliebiger Länge zur Verfügung stellen zu können, die insgesamt aufgrund ihrer Herstellung aus Gußteilen, die als Fertigteile keiner weiteren Bearbeitung bedürfen, billig zur Verfügung gestellt werden kann. Die Halteschiene, die vorzugsweise aus Metall auf der Basis von Aluminium als Strangguß- bzw. Strangpreßprofil ausgebildet ist, ist vorzugsweise einstückig über die Verschiebestrecke hinweg verlaufend ausgebildet und je nach Torblattlänge zuzuschneiden, wobei man die Endlänge auf die Summe der Längen der einzusetzenden Zahnstangensegmente abstimmen kann. Dann lassen sich Zahnstangen-Endsegmente einsetzen, die das Abstützen der Reihe aus Zahnstangensegmenten in Längsrichtung der Halteschiene an deren jeweiligen stirnseitigen Enden ermöglichen. Die Schiene selbst ist mit dem Torblatt bzw. dem Torblattsockel verschraubt. Es ist jedoch auch möglich, die Halteschiene unabhängig vom Rastermaß der Zahnstangensegmentlängen auszubilden und wenigstens eines der Zahnstangensegmente, das am Ende der Halteschiene übersteht, entsprechend abzuschneiden. In diesem Falle wird man die Abstützung der Reihe von Zahnstangensegmenten an der Halteschiene durch eine seitliche Verschraubung oder dergleichen sicherstellen, die einen Seitenbereich des Halteschienenprofils durchgreift und in einen Sockelbereich oder dergleichen eines oder mehrerer der Zahnstangensegmente eingreift.

Die Zahnstangensegmente weisen eine Zahnflankenausbildung im Übergangsbereich zwischen zwei benachbarten Segmenten auf, die zum Teil von dem einen und zum Teil von dem anderen Segment zur Verfügung gestellt wird, so daß also der Übergang einer Zahnflanke Zähneausbildungen im Nachbarbereich zweier aufeinanderfolgender Zahnstangensegmente umfaßt. Zwischen zwei aufeinanderfolgenden Zahnstangensegmenten ist jeweils eine Eingreifausbildung vorgesehen, die aus einem an dem einen Segment ausgebildeten Steckerteil und einem an dem anderen Segment ausgebildeten Aufnahmeteil besteht, wobei die Ausbildung derart getroffen sein kann, daß das Steckerteil in eine entsprechende Aussparung des Aufnahmeteils aus der der Zähneausbildung abgewandten Richtung her senkrecht zur Längsrichtung der Segmente hin erfolgt, so daß sich eine formschlüssige, zug- und druckbelastbare Verbindung zwischen den Segmenten ergibt. Selbstverständlich könnte eine solche Verbindung auch durch Einstecken von einer anderen Richtung her, vorzugsweise aber grundsätzlich etwa senkrecht zur Längsrichtung der Zahnstangenausbildung erfolgend, vorgesehen sein.

In besonders bevorzugter Ausführung werden für eine sich über die Verschiebelänge des Schiebetores hinweg erstreckende Zahnstangenausbildung identisch übereinstimmend ausgeformte Zahnstangensegmente verwendet, deren jedes nur einen Bruchteil der Gesamtlänge umfaßt, beispielsweise im Bereich von 100 mm. Die Segmente sind dabei insbesondere als Kunststoff-Spritzgußteile hergestellt, und zwar bevorzugt dergestalt, daß sie insoweit Schalenkörper bilden, als die Wandungen der Zahnausbildungen wie diejenigen des diese tragenden Sockelabschnittes, an dem Führungsvorsprünge für den Einsatz in entsprechende Nuten der Halteschiene ausgeformt sein können, und diejenigen des Steckerteils und des Aufnahmeteils sowie etwa vorgesehener Formversteifungsrippen etwa gleich dick gehalten sind.

In weiterhin bevorzugter Ausführung kann die Verzahnung der Zahnstangenausbildung und damit diejenige der einzelnen Zahnsegmente hinsichtlich des Zahnflankenlängsverlaufes etwas aus der Senkrechten zur Längsrichtung der Segmente abweichend schräg verlaufend angeordnet sein, an welchen Zahnflankenverlauf dann das Antriebsritzel entsprechend angepaßt ist.

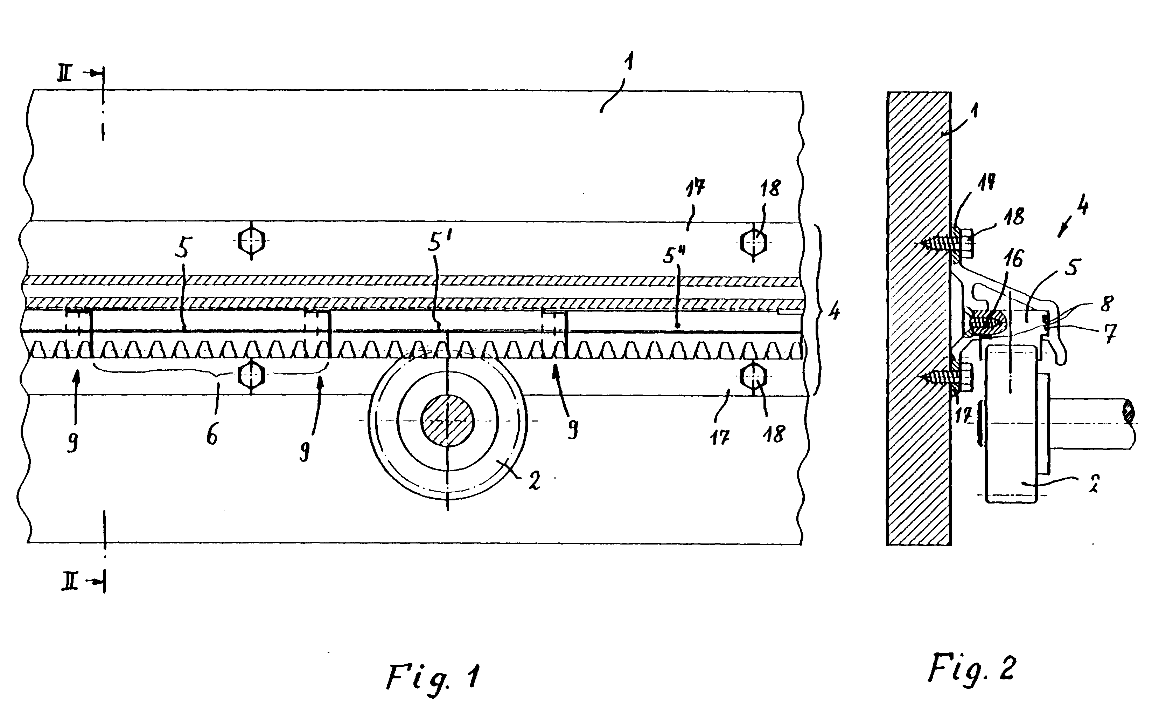

Diese und weitere bevorzugte Ausführungen ergeben sich aus den Unteransprüchen im Zusammenhang mit dem in der Zeichnung wiedergegebenen Ausführungsbeispiel, auf das besonders Bezug genommen wird und dessen nachfolgende Beschreibung die Erfindung näher erläutert. Es zeigen:
Figur 1:
   eine Seitenansicht in Achsrichtung des Abtriebsritzels des nicht dargestellten Motorantriebsaggregates auf einen entsprechend um den Antriebsbereich herum beschränkten Längsabschnitt eines Torblattes bzw. Torblattsockels;
Figur 2:
   einen Schnitt nach der Linie II-II in Figur 1 unter Einbezug eines Zahnstangen-Endsegmentes:
Figur 3:
   eine perspektivische Ansicht dreier Zahnstangensegmente, von denen zwei in den Verbindungszustand miteinander überführt sind, während das dritte die Überführung in den Verbindungszustand schematisch erkennen läßt.

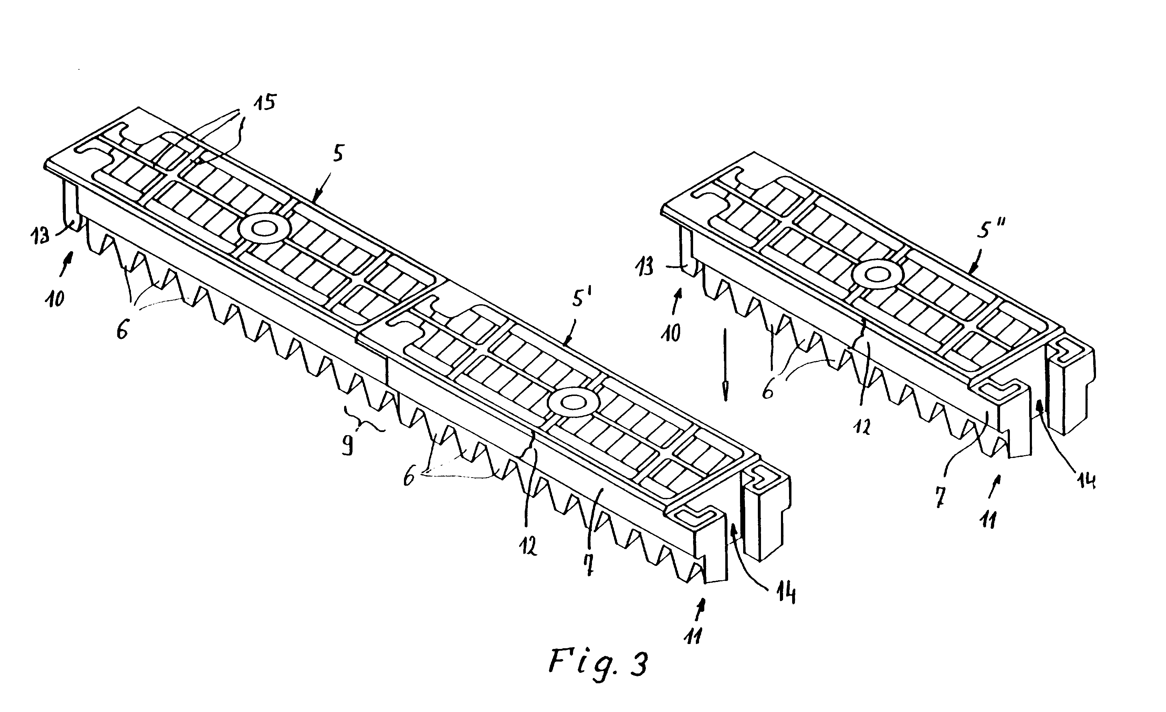

Die Teilseitenansicht gemäß Figur 1 zeigt die Ansicht auf einen Torblattsockel 1 von der Seite des nicht dargestellten Motor-Antriebsaggregates aus, an dessen geschnitten wiedergegebene Ausgangswelle ein Abtriebsritzel 2 verdrehfest angeordnet ist, das mit seiner Schrägstirnverzahnung in eine entsprechend schräg verzahnte, insgesamt mit 3 bezeichnete Zahnstangenausbildung eingreift, die aus einer Halteschiene 4 und einer Anzahl in Aufeinanderfolge in diese eingesetzten Zahnstangensegmenten 5,5', 5".. besteht. Jedes der Zahnstangensegmente 5,5', 5".. ist an seiner dem Abtriebsritzel 2 zugewandten Seite mit einer Zähneausbildung 6 versehen, die im Zuge der Spritzguß-Herstellung der Zahnstangensegmente ausgebildet wird und keiner weiteren Bearbeitung bedarf. Die Zähneausbildungen 6 der aufeinanderfolgenden Zahnstangensegmente 5,5',5".. sind derart getroffen, daß sich eine von Segment zu Segment durchgehende Verzahnung ergibt. Dabei können sich eine oder mehrere Zahnflanken im Übergangsbereich zwischen zwei benachbarten Elementen senkrecht bzw. schräg zur Längsrichtung der Halteschiene gesehen aus Teilbereichen zusammensetzen, deren einer dem einen Segment und deren anderer dem anderen Segment zugeordnet ist. Aufgrund der im Zusammenhang mit Figur 3 noch näher zu erläuternden Verbindung zwischen aufeinanderfolgenden Segmenten können sich dabei insbesondere Zahnflankenausbildungen ergeben, deren Mittelbereich durch die Zähneausbildung des einen Segmentes und deren Randbereiche im Schrägverlauf der Verzahnung gesehen von der Zähneausbildung des anderen Segmentes gebildet sind.

In Figur 1 ist mit 9 jeweils eine Eingreifausbildung zwischen aufeinanderfolgenden Zahnstangensegmenten 5,5' bzw.. 5" angedeutet. Wie Figur 3 erkennen läßt, besteht jede dieser Eingreifausbildungen aus einem Steckerteil 10 und einem Aufnahmeteil 11. Der Steckerteil 10, der an jedem der Zahnstangensegmente 5,5',5".. an der einen, im Bild beispielsweise linken, Stirnseite eines jeden der Segmente ausgeformt ist, greift in den jeweils am anderen stirnseitigen Ende - in der Figur rechts - ausgeformten Aufnahmeteil 11 ein. Die Segmente sind untereinander also identisch ausgeformt. Im vorliegenden Beispiel ist der Steckerteil 10 in Draufsicht auf die Zähneausbildung 6 gesehen etwa T-förmig ausgebildet, wobei der T-Querbalken 13 sich senkrecht zur Längsrichtung des jeweils betrachteten Segmentes 5,5', 5".. erstreckt, dessen Stegbereich in die Zähneausbildung 6 des zugehörigen Segmentes übergeht. Der Aufnahmeteil 11 weist jeweils eine Ausnehmung 14 auf, die im Querschnitt an dem T-Querbalken und den aus der Zeichnung nicht ersichtlichen zugehörigen Steg des Steckerteils 10 angepaßt ist. Wie in Figur 3 angedeutet, wird die Verbindung zwischen zwei Zahnstangensegmenten 5' und 5" derart hergestellt, daß das eine Steckerteil 5" in Richtung des dort ersichtlichen Pfeiles mit seinem Steckerteil 10 in die Ausnehmung des Aufnahmeteils 11 eingesetzt wird, also von der der Zähneausbildung 6 abgewandten Seite her und senkrecht zur Längsrichtung der Segmente. Die rechterhand in Figur 3 gezeigten Segmente 5 und 5' befinden sich in diesem dergestalt herbeizuführenden Verbindungszustand, in der der Steckerteil 10 in das Aufnahmeteil 11 überführt ist und die Eingreifausbildung 9 somit besteht.

In vorliegendem Ausführungsbeispiel ist die Zähneausbildung 6 eines jeden Segmentes oberhalb eines Sockelabschnittes 12 ausgebildet, der seitliche Führungsvorsprünge 7 aufweist, mit welchen die Segmente 5,5',5''.. in die Halteschiene 4 lediglich in deren Längsrichtung verschiebbar eingeführt sind, und zwar derart, daß die Führungsvorsprünge 7 in Haltenuten 8 des Profils der Halteschiene 4 eingreifen, wie dies insbesondere Figur 2 erkennen läßt. Jedes der Segmente, einige oder aber auch nur die jeweiligen, nach vollständigem Auffüllen der Halteschiene 4 in deren Endbereichen angeordneten Segmente 5 sind in dieser Lage festgelegt, so daß die gesamte Reihe der Segmente in Längsrichtung fixiert wird. Dies geschieht im Ausführungsbeispiel mit Hilfe von Schrauben 16, die eine Stegwandung einer der Haltenuten 8 der Halteschiene 4 durchgreifen und im Sockelabschnitt 12 des jeweils betroffenen Segmentes verankert sind. Die Halteschiene 4 weist zwei parallel verlaufende, seitliche Anlagebereiche 17 auf, mit der sie an dem Torblattsockel 1 mit Hilfe von Schrauben 18 festgelegt ist. Wie aus Figur 2 ersichtlich ergibt sich damit durch die Halteschiene eine Art Dachfunktion für die aufgenommenen Segmente 5,5',5".. sowie den Eingriffsbereich zwischen deren Zähneausbildung 6 und der Stirnverzahnung des Abtriebsritzels 2.

Wie aus Figur 3 ersichtlich, sind die einzelnen Zahnstangensegmente 5,5',5".. insoweit schalenförmig ausgebildet, als praktisch sämtliche Wandungen etwa gleich dick ausgebildet sind, es handelt sich dabei um die Wandungen des Sockels, der Zähneausbildung des Steckerteils und des Aufnahmeteils sowie von Verstrebungen 15, die zur Formstabilisierung innerhalb des von dem Sockelabschnitt 12 und dessen Führungsvorsprüngen 7 sowie der Innenseite der Zähneausbildung 6 umrissen ist.

## Patentansprüche

1. Schiebetor (1), insbesondere Schiebetor-Sockelbalken mit einem auf diesem befestigten Toraufbau wählbarer Ausgestaltungen, das in Verschieberichtung hin- und hergehend mittels eines ortsfest angeordneten Antriebsmotoraggregates bewegbar geführt ist, welches ein Abtriebsritzel (2) aufweist, das in eine an den Torblatt bzw. Sockelbalken festgelegte Zahnstangenausbildung (3) kämmend eingreift, wobei die Zahnstangenausbildung (3) aus einer Reihe von aufeinanderfolgend in eine Verschieberichtung des Torblattes verlaufende, an diesem festgelegte Halteschiene (4) eingesetzten Zahnstangensegmentes (5, 5', 5") zusammengesetzt ist, die als Fertiggußteile hergestellt und in ihrer zahnteilungsgerechten Aufeinanderfolge untereinander fixiert sind und wobei die Zahnstangensegmente (5, 5', 5") an ihren jeweils aufeinander zugewandten, benachbarten Endbereichen mit einer Eingreifausbildung (9) aus einem an dem einen Zahnstangensegment (5) ausgebildeten Steckerteil (10) und einem an dem anderen Zahnstangensegment (5') ausgebildeten Aufnahmeteil (11) versehen sind,
**dadurch gekennzeichnet**,
daß Zahnflanken, die quer über den Bereich der Eingreifausbildung (9) verlaufen, sich jeweils aus Teilbereichen zusammensetzen, die an dem Steckerteil (10) einerseits und dem Aufnahmeteil (11) andererseits aus ausgebildet sind.

2. Schiebetor nach Anspruch 1,
**dadurch gekennzeichnet**,
daß die Zahnstangensegmente (5, 5', 5") mit beidseitig der Zähneausbildung (6) auskragenden Führungsvorsprüngen (7) versehen sind, die in entsprechende Aufnahmenuten (8) der Halteschiene (4) eingreifen.

3. Schiebetor nach Anspruch 1 oder 2,
**dadurch gekennzeichnet,**
daß die Zahnstangensegmente (5, 5', 5") als übereinstimmende Gußstücke ausgebildet sind.

4. Schiebetor nach einem der Ansprüche 1 bis 3,
**dadurch gekennzeichnet**,
daß die Zahnstangensegmente (5, 5', 5") in eine in Verschieberichtung formschlüssig und zahnteilungsgerecht, zug- und druckbelastbare Verbindung miteinander einsetzbar sind.

5. Schiebetor nach Anspruch 4,
**dadurch gekennzeichnet**,
daß das Steckerteil (10) T-förmig mit seinem dem Querbalken (13) abgewandten Steg einstückig an dem stirnseitigen Ende des zugehörigen Zahnstangensegmentes (5, 5', 5") ausgeformt ist und daß das das Steckerteil (10) aufnehmende Aufnahmeteil (11) im stirnseitigen Endbereich des benachbarten Zahnstangensegmentes (5, 5', 5") eine an die Umrißform des T-förmigen Steckerteils (10) angepaßte Ausnehmung (14) aufweist.

6. Schiebetor nach Anspruch 5,
**dadurch gekennzeichnet**,
daß das Steckerteil (10) von der die Zähneausbildung (6) aufweisenden Seite gegenüberliegenden Seite her gesehen etwa senkrecht zur Längsrichtung der zu verbindenden Zahnstangensegmente (5, 5', 5") in die im Verbindungszustand zugeordnete Ausnehmung (14) einschiebbar ist.

7. Schiebetor nach einem der Ansprüche 1 bis 6,
**dadurch gekennzeichnet**,
daß die Zahnstangensegmente (5, 5', 5") insoweit als Schalenkörper ausgebildet sind, als die Wandungen der Zähneausbildungen (6) wie diejenigen des diese tragenden Sockelabschnittes (12), an dem die Führungsvorsprünge (7) ausgeformt sein können, und diejenigen des Steckerteils (10) und des Aufnahmeteils (11) sowie etwa vorgesehener Formsteifigkeitsrippen (15) zumindest über einen Großteil etwa gleich dick gehalten sind.

8. Schiebetor nach einem der Ansprüche 1 bis 7,
**dadurch gekennzeichnet**,
daß die Zahnflanken der Zähneausbildung (6) hinsichtlich Zahnflankenverlaufs um einen verhältnismäßig kleinen Winkel schräg verlaufend ausgebildet sind und daß entsprechend der Flankenverlauf der Stirnverzahnung des Abtriebsritzels (2) schräg zur Rotationsachse ausgerichtet ist.

9. Schiebetor nach einem der Ansprüche 1 bis 8,
**dadurch gekennzeichnet**,
daß wenigstens die an den Enden der Zahnstangenausbildung aus den Zahnstangensegmenten (5, 5', 5") in der Halteschiene (4) anzuordnenden Zahnstangensegmente an der Halteschiene (4) gegen Bewegung in deren Längsrichtung festlegbar sind, so mittels Stirnseitenbereiche des Halteschienenprofils übergreifender Endausbildungen besonderer Zahnstangen-Endsegmente und/oder insbesondere durch Fixierung zumindest der an beiden Enden angeordneten Zahnstangensegmente mittels Arretierschrauben (16) oder dergleichen Sperrstifte, die etwa senkrecht zur Längserstreckung der Halteschiene (4) durch einen derer Schenkelbereiche, insbesondere Wandungen einer der Haltenuten (8), geführt in den Sockelabschnitt (12) des betreffenden Zahnstangensegmentes (5, 5', 5"), insbesondere der in Längsrichtung der Halteschiene (4) gelegenen Zahnstangen-Endsegmente, in Schienenlängsrichtung formschlüssig wirksam eingreifen.

10. Schiebetor nach einem der Ansprüche 1 bis 9,
**dadurch gekennzeichnet**,
daß die Zahnstangensegmente (5, 5', 5") aus Kunststoff und/oder die Halteschiene (4) aus Metall, insbesondere auf der Basis von Aluminium bestehen.

11. Schiebetor nach einem der Ansprüche 1 bis 10,
**dadurch gekennzeichnet**,
daß die Halteschiene (4) die Zahnstangensegmente (5, 5', 5") mit nach unten gerichteter Zähneausbildung (6) und nach unten anschließend eingreifendem Abtriebsritzel (2) dachförmig übergreifend an dem Torblatt bzw. Sockelbalken (1) festgelegt ist.

12. Schiebetor nach Anspruch 1,
**dadurch gekennzeichnet**,
daß ein über die Breite des Zahnstangensegments (5, 5', 5''9 gesehener Mittelbereich von einer im Bereich des Steckerteils (10) ausgeformten Zahnflankenausbildung und die an dem Mittelbereich beidseitig anschließenden Randbereiche von im Bereich des Aufnahmeteils (11) ausgeformten Zahnflankenausbildung gebildet sind.

## Claims

1. A sliding door (1), more particularly a sliding door-plinth bar having a door mounting of suitable design secured to it, which door is guided so as to move backwards and forwards in the displacement direction, by means of a fixedly arranged drive motor unit which has a drive pinion (2) which meshingly engages in a rack construction (3) mounted on the doorleaf or the plinth bar, the rack construction (3) being made up of a number of rack segments (5, 5', 5") successively fitted into a support bar (4) which extends in a displacement direction of the doorleaf and is secured to said doorleaf, which rack segments are produced as prefabricated cast parts and are successively interlocked so that their tooth pitch matches, the rack segments (5, 5', 5") being provided at each of their facing, adjacent end regions with an engagement projection (9) comprising a plug part (10) arranged on the one rack segment (5), and a receptor part (11) arranged on the other rack segment (5') characterised in that tooth edges which extend transversely over the region of the engagement construction (9) are each composed of partial regions which are provided on the plug part (10), on the one hand, and on the receptor part (11), on the other hand.

2. A sliding door according to Claim 1, characterised in that the rack segments (5, 5', 5") are provided with guide projections (7) which jut out on either side of the tooth construction (6) and engage in corresponding receiving grooves (8) of the support bar (4).

3. A sliding door according to Claim 1 or 2, characterised in that the rack segments (5, 5', 5") are in the form of matching cast pieces.

4. A sliding door according to Claims 1 to 3, characterised in that the rack segments (5, 5', 5") may be interconnected so as to be form-locking in the displacement direction, have a matching pitch and be capable of being subjected to tension and pressure.

5. A sliding door according to Claim 4, characterised in that the plug part (10) is formed as a T-shape, with its crosspiece remote from its web (13), which is integral with the front end of the associated rack segment (5, 5', 5"), and that the receptor part (11) receiving the plug part (10) has a recess (14) adapted to the outer contour of the T-shaped plug part (10), in the front end region of the adjacent rack segment (5, 5', 5").

6. A sliding door according to Claim 5, characterised in that the plug part (10) may be inserted into the corresponding recess (14) in the connecting stage, substantially vertically relative to the longitudinal direction of the rack segments (5, 5', 5") to be connected, viewed from the side opposite the side on which the tooth construction (6) is arranged.

7. A sliding door according to Claims 1 to 6, characterised in that the rack segments (5, 5', 5") are constructed as shell members, the walls of the tooth constructions (6) as well as those of the plinth section (12), which carry the tooth constructions and on which the guide projections (7) are formed, and those of the plug part (10) and the receptor part (11) as well as any ribs (15) which may be provided to give dimensional stability, being, at least over a large part, of substantially the same thickness.

8. A sliding door according to Claims 1 to 7, characterised in that the tooth edges of the tooth construction (6) extend, in respect of their path, at an angle which is comparatively small, and that the path of the edges of the radial serrations of the drive pinion (2) extends, accordingly, at an angle relative to the rotational axis.

9. A sliding door according to one of Claims 1 to 8, characterised in that at least the rack segments to be arranged on the support bar (4), at the ends of the rack construction formed by the segments (5, 5', 5"), may be secured to the support bar (4) so as to be non-movable in the longitudinal direction thereof, which is achieved by means of end formations of special rack-end segments, which engage over front regions of the support bar section, and/or, in particular, through fixing at least the rack segments arranged at either end, using locking screws (16) or similar locking pins, which, guided substantially vertically to the length of the support bar (4) through one of the leg regions thereof, more particularly walls of one of the retaining grooves (8), positively engage, in the longitudinal direction of the bar, in the plinth section (12) of the relevant rack segment (5, 5', 5"), more particularly the rack-end segment positioned in the longitudinal direction of the support bar (4).

10. A sliding door according to one of claims 1 to 9, characterised in that the rack segments (5, 5', 5") are made of plastic material and/or the support bar (4) is made of metal, more particularly based on aluminium.

11. A sliding door according to one of Claims 1 to 10, characterised in that the support bar (4) is secured to the doorleaf or the plinth bar (1), while engaging, in a roof-shaped manner, over the rack segments (5, 5', 5") with downwardly oriented teeth, in which the downwardly adjoining drive pinion (2) engages.

12. A sliding door according to Claim 1, characterised in that a central region, viewed from the width of the rack segment (5, 5', 5"), is formed by a tooth edge construction provided in the region of the plug part (10), and that the edge regions adjoining the central region on either side, are formed by a tooth edge construction provided in the region of the receptor part (11).

## Revendications

1. Portail coulissant (1), notamment poutre de socle de portail coulissant, avec sur cette construction de portail à poste fixe, une structure pouvant être choisie, qui est guidée dans la direction de déplacement aller et retour au moyen d'un groupe moteur monté à poste fixe et comportant un pignon de sortie (2) qui vient en prise par engrènement sur une configuration de crémaillère (3) fixée sur le vantail ou la poutre de socle, la configuration de crémaillère (3) étant composée d'une rangée de segments de crémaillère (5, 5', 5") se succédant dans une direction de déplacement du vantail, et mis en place sur un rail de maintien (4) fixé sur celui-ci, ces segments étant réalisés sous la forme de pièces moulées finies, et fixés entre eux dans leur succession de pas de dents, tandis que ces segments de crémaillère (5, 5', 5"), à leurs parties d'extrémité voisines, respectivement tournées l'une vers l'autre, sont munis d'une configuration d'accrochage (9) constituée d'une partie mâle (10) formée sur un segment de crémaillère (5) et d'une partie femelle (11) formée sur l'autre segment de crémaillère (5'), portail coulissant caractérisé en ce que des flancs de dents, qui s'étendent transversalement sur la zone de la configuration d'accrochage (9), se composent respectivement de zones partielles qui sont formées d'un côté sur la partie mâle (10) et de l'autre sur la partie femelle (11).

2. Portail coulissant selon la revendication 1, caractérisé en ce que les segments de crémaillère (5, 5', 5") sont munis, des deux côtés de la configuration de dents (6), de saillies de guidage en encorbellement (7) qui viennent en prise dans des rainures correspondantes (8) du rail de maintien (4).

3. Portail coulissant selon la revendication 1 ou 2, caractérisé en ce que les segments de crémaillère (5, 5', 5") sont réalisés sous la forme de pièces moulées coïncidentes.

4. Portail coulissant selon l'une des revendications 1 à 3, caractérisé en ce que les segments de crémaillère (5, 5', 5") sont susceptibles d'être mis en place ensembles dans une liaison à engagement positif respectant le pas des dents et pouvant résister à la traction et à la pression.

5. Portail coulissant selon la revendication 4, caractérisé en ce que la pièce mâle (10) en forme de T avec son entretoise opposée à la barre transversale (13) est formée d'un seul tenant sur l'extrémité frontale de l'élément associé (5, 5', 5"), et en ce que la partie femelle (11) recevant la partie mâle (10) comporte, sur la zone terminale frontale du segment de crémaillère voisin (5, 5', 5"), un évidement (14) adapté à la forme du contour de la partie mâle (10)en forme de T.

6. Portail coulissant selon la revendication 5, caractérisé en ce que la partie mâle (10), vue à partir du côté opposé au côté comportant la configuration de dents (6), est enfichable à peu près perpendiculairement à la direction longitudinale des segments de crémaillère (5, 5', 5") à relier, dans l'évidement (14) associé, dans l'état de liaison.

7. Portail coulissant selon l'une des revendications 1 à 6, caractérisé en ce que les segments de crémaillère (5, 5', 5") sont en forme de coquilles dans la mesure où les parois des configurations de dents (6) comme celles du tronçon de socle (12) portant celles-ci, sur lequel les saillies de guidage (7) peuvent être formées, et celles de la partie mâle (10) et de la partie femelle (11), ainsi que des nervures de raidissement de forme (15) éventuellement prévues, sont maintenues à une épaisseur à peu près identique sur au moins une grande partie.

8. Portail coulissant selon l'une des revendications 1 à 7, caractérisé en ce que les flancs de dents de la configuration de dents(6), en ce qui concerne l'allure de ces flancs de dents, sont formés en s'étendant obliquement d'un petit angle proportionnel, et en ce que, de façon correspondante, l'allure des flancs de la denture frontale du pignon de sortie est orientée obliquement par rapport à l'axe de rotation.

9. Portail coulissant selon l'une des revendications 1 à 8, caractérisé en ce qu'au moins les segments de crémaillère devant être disposés sur le rail de maintien (4) aux extrémités de la configuration de crémaillère des segments de crémaillère (5, 5', 5"), sont susceptibles d'être fixés contre un déplacement dans leur direction longitudinale, soit au moyen de parties latérales frontales du profilé de rail de maintien venant en prise sur des configurations terminales de segments terminaux de crémaillère particuliers, et/ou notamment par fixation, tout au moins des segments de crémaillère disposés aux deux extrémités, au moyen de vis d'arrêt (16) ou de broches à déclic analogues qui, guidées à peu près perpendiculairement par rapport à l'extension longitudinale du rail de maintien (4), à travers une de ses parties de branches, notamment des parois d'une des rainures de maintien (8), dans le tronçon de socle (12) du segment de crémaillère concerné (5, 5', 5"), notamment le segment de crémaillère terminal situé en direction longitudinale du rail de maintien (4), viennent en prise efficacement par engagement positif en direction longitudinale du rail.

10. Portail coulissant selon l'une des revendications 1 à 9, caractérisé en ce que les segments de crémaillère (5, 5', 5") sont constitués de matière synthétique, et/ou le rail de maintien (4) est constitué de métal, notamment à base d'aluminium.

11. Portail coulissant selon l'une des revendications 1 à 10, caractérisé en ce que le rail de maintien (4) est fixe au vantail ou à la poutre de socle (1) en s'étendant en forme de toit sur les segments de crémaillère (5, 5', 5"), avec leur configuration de crémaillère (6) orientée vers le bas, et le pignon de sortie (2) venant en prise vers le bas immédiatement après.

12. Portail coulissant selon la revendication 1, caractérisé en ce qu'une zone médiane, vue sur la largeur du segment de crémaillère (5, 5', 5"), est formée d'une configuration de flancs de dents moulée sur la zone de la partie mâle (10), et les zones de bordure se raccordant des deux côtés à la zone médiane, sont formées d'une configuration de flancs de dents moulée sur la zone de la partie femelle.
